# EUROPEAN PATENT APPLICATION

(11) **EP 1 411 731 A1**
(43) Date of publication of application: **21.04.2004**
(21) Application number: 03300113.2
(22) Date of filing: 09.09.2003
(51) Int. Cl.: H04N 7/52, H04N 5/783, H04N 7/46

(54) **Process for controlling an audio/video digital decoder**

(30) Priority: 13.09.2002 FR 0211533
(71) Applicant: Thomson Licensing S.A., 92100 Boulogne-Billancourt (FR)
(72) Inventor: Creusot, Daniel, 78960 Voisins le Bretonneux (FR); Ritz, Edouard, 92310 Sevres (FR)
(74) Representative: Bonnans, Arnaud

(57) **Abstract**

In a process for controlling an audio/video digital decoder, a digital audio/video stream (MPEG) is acquired continuously, the video part (MPEG Video) of which is composed of an ordered sequence of images, a video decoding (22) of all the images of the sequence is carried out and a video signal (CVBS) based on only part of the images of the sequence is generated (28) without however interrupting the playing of the audio sequence (Audio R, Audio L).

## Description

The present invention relates to a process for controlling an audio/video digital decoder.

It is common nowadays to have access to an audiovisual programme generated from digital data, for example a digital medium (such as a disk) or a digital stream transported by cable or satellite.

The digital data are coded according to a certain standard, for example MPEG (standing for *Moving Picture Expert Group*), for their transport. When one wishes to have access to the audio/video content represented by these digital data, one uses an audio/video decoder which generates signals able to be viewed and listened to on standard apparatus (for example CVBS or RGB video signals on a television).

For video, the MPEG standard proposes 3 types of possible coding for the various images that make up the coded video sequence : coding (and hence image) of I type (intra), of P type (inter) and of B type (bidirectional).

Knowing of the digital data that correspond to an image of I type is sufficient to generate this image. On the other hand, to be able to decode the images of P and B type, it is necessary to have previously had access to (and even decoded) the adjacent reference image (I or P type). This drawback is offset by the fact that as a consequence the digital data that correspond to the images of P and B type are of reduced size.

It is sometimes desirable to view only part of the images coded in the digital stream. For example, during a freeze frame, one desires to display just a single image for a certain span of time. Likewise, one sometimes desires to display only the images of I type, or alternatively only the images of I and P type. (For the requirements of the account, the images to be displayed will be referred to as images of the first type.)

In general, this latter solution is proposed during the accelerated viewing of a video sequence (fast forward). In order not to overload the video decoder which is dimensioned for decoding images at normal viewing speed, it is known to decode only the images to be viewed (images of the first type), namely only the images of I type or only the images of types I and P, as the case may be.

This solution does not therefore allow the use of the normal procedure for decoding the digital stream since the B type images must be skipped on decoding.

This solution moreover causes a loss of synchronism between the audio sequence and the video sequence. Within the framework of accelerated viewing, the range of this drawback is limited since it is not in general possible anyway to obtain an audible accelerated audio signal.

However, when one leaves the accelerated mode to return to the normal mode, this defect of synchronism requires a resynchronization phase which is in general manifested as the displaying of a black screen for a duration of the order of a second.

Moreover, if one's standpoint is outside the framework of accelerated viewing, it is also desirable to preserve synchronism so as to be able to maintain normal playing of the audio sequence even if the displaying of the images of B type does not occur.

In order to preserve synchronism at every instant even during the displaying of only part of the digital stream, the invention proposes a process for controlling an audio/video digital decoder comprising the following steps :
- continuous acquisition of a digital audio/video stream, the digital video stream being composed of an ordered sequence of images ;
- video decoding of all the images of the sequence ;
- generation of a video signal based on only part of the images of the sequence.

Here, the expression "only part of the images" is understood to mean a limited part of the images, that is to say a part different from the totality of the images.

Advantageously, the process also comprises the step of :
- decoding the digital audio stream into an audio sequence in synchronism with the video decoding.

The audio sequence can thus be played in parallel (that is to say simultaneously with the generating of the signal based on a limited part of the images).

The limited part may be a single image of the sequence : this is the freeze frame case.

This process makes it possible to freeze and then to resume display on an image of any type while allowing the audio to continue in parallel in synchronism with the video. The resumption of display is immediate and with no black screen.

This solution can also advantageously be used in order to avoid the drawbacks related to the loss of synchronism during the viewing of images of the first type only (type I in one case; types I and P in the other).

In this case, the sequence comprises images of a first type and images of a second type and the part (on the basis of which the video signal is generated) of the images is limited to the images of the first type.

The acquisition may be a reading from a digital medium or a reception of a digital stream.

Preferably, the video signal is intended for display.

The invention therefore also proposes a process for controlling an audio/video digital decoder comprising the following steps :
- continuous acquisition of a digital audio/video stream, the digital video stream being composed of an ordered sequence of images of a first type and of a second type ;
- video decoding of the images of the first type and of the images of the second type ;
- generation of a video signal based on the images of the first type only.

Stated otherwise, the invention proposes a process for controlling an audio/video digital decoder comprising the following steps :
- video decoding of first data into a first image of the first type ;
- displaying of the first image and simultaneous video decoding of second data into images of the second type and of third data into a second image of the first type ;
- displaying of the second image.

Other characteristics of the invention will become apparent in the light of the description of an exemplary embodiment of the invention given with reference to the appended figures, where :
- Figure 1 represents a digital decoder according to a first embodiment of the invention ;
- Figures 2a to 2l illustrate the decoding and display procedure in the digital decoder of Figure 1 in normal mode ;
- Figures 3a to 3o illustrate the decoding and display procedure in the digital decoder of Figure 1 in I mode ;
- Figure 4 represents a digital decoder according to a second embodiment of the invention.

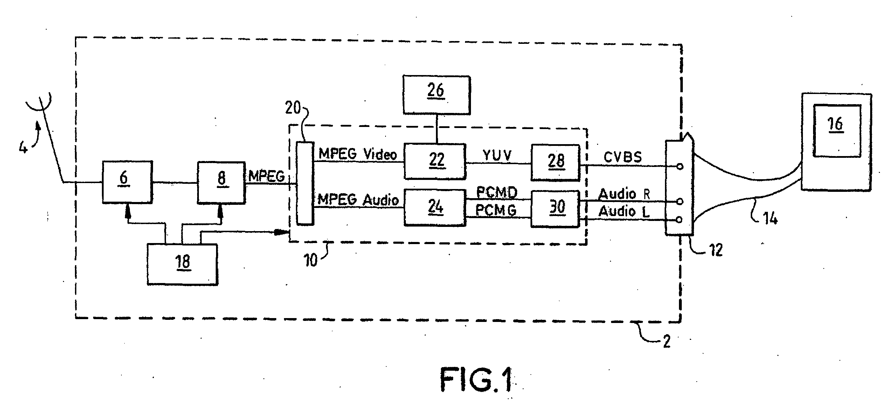

The digital decoder 2 represented in Figure 1 receives signals from an antenna 4 represented symbolically. The signals emanating from the antenna are transmitted to a tuner/demodulator assembly 6, often dubbed the front end. The front end 6 selects a signal received at a given frequency and transmits this signal in baseband to a demultiplexer 8 which extracts therefrom a digital data stream, for example according to the MPEG standard. This data stream is then translated into a video signal and into an audio signal by an audio/video decoder 10. The audio and video signals (for example of the CVBS type) are dispatched to a connector 12, for example a Scart socket, so as to be transmitted by a cable 14 and then displayed on a display apparatus 16, for example a television.

The various electronic circuits of the digital decoder 2, such as the front end 6, the demultiplexer 8 and the audio/video decoder 10, work under the supervision of a microprocessor 18.

The audio/video decoder 10 comprises an input module 20 which separates the incoming MPEG stream into an audio data stream MPEG Audio destined for an audio decoder 24 and a video data stream MPEG Video destined for a video decoder 22. The MPEG Audio and MPEG Video data streams are packetized elementary streams (PESs). The MPEG Video stream is therefore composed of images of types I, P and B.

The video decoder 22 converts the MPEG Video stream into a YUV digital stream which represents according to the CCIR 601 standard a video sequence able to be displayed after digital/analogue conversion in a video encoder 28. As indicated previously, the video signal at the output of the video encoder 28 (and hence of the audio/video decoder 10) is of the CVBS type. It could also be a signal of S-video (Y/C) or RGB type. (Video encoders generally deliver signals according to these various formats.)

The audio decoder 24 transforms the incoming audio stream MPEG Audio into two digital audio streams PCM R and PCM L which are then respectively converted into two analogue audio signals Audio R and Audio L so as to obtain a stereo sound.

The simultaneous decodings in the video decoder 22 and in the audio decoder 24 make it possible to guarantee synchronism between the audio sequence and the video sequence which guarantees good restoration of the content.

The video decoding process under normal operation will now be detailed.

The video decoder 22 receives the elementary video stream MPEG Video and stores the data received, then decoded, in a video memory 26.

Upon their receipt, the data that correspond to an image of I, P or B type are firstly stored in a buffer memory or *rate buffer.* They are then decoded to reconstruct the video image that they represent. This reconstructed video image is stored in the video memory 26, in a frame memory area or *frame buffer.* When the image is fully decoded (that is to say reconstructed), it can be output so as to be displayed ; to do this, the display pointer is placed at the start of the corresponding frame memory area. The video decoder 22 then generates a YUV digital stream to represent this decoded image.

The images of I type do not require any other data in order to be reconstructed. The images of P type use the previous reference image (of I or P type) for their decoding. The images of B type use the two reference images (I or P) that surround them for their decoding. The memory must therefore be able to contain three frame memory areas to decode an image of B type : two frame memory areas for the storage of the reference images (I or P) and one frame memory area for the decoding of the B type image.

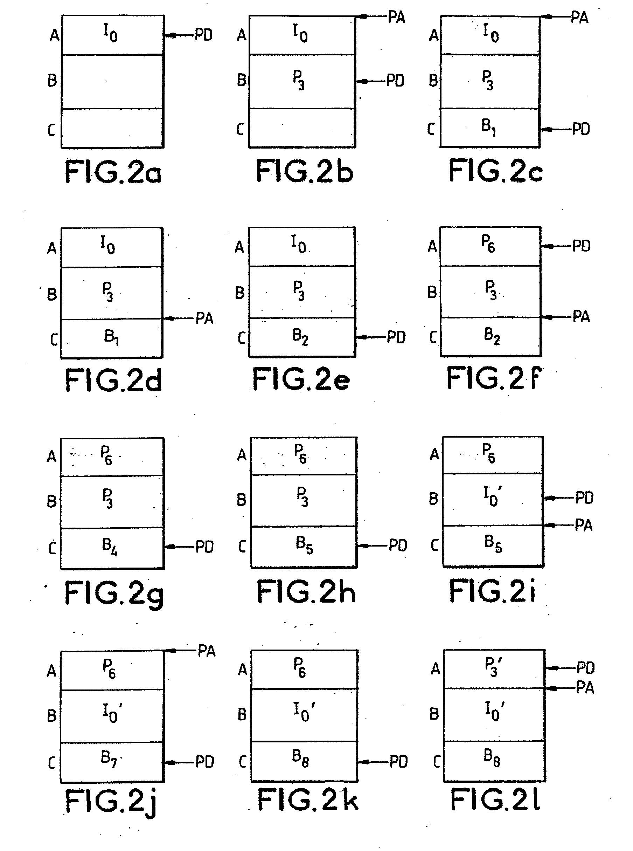

The detail of the decoding of a group of pictures (GOP) during normal operation will now be described with reference to Figures 2a to 21.

The decoder receives the following video sequence :
I₀P₃B₁B₂P₆B₄B₅I₀'B₇B₈P₃'B₁'B₂'.

The indices indicate the order in which the images are to be ultimately displayed after decoding. The images are not received in the order of display since the decoding of the B type images requires the prior decoding of the adjacent reference images.

In Figure 2a, image I₀ is decoded and stored in a memory area A of the video memory 26. The decoding pointer PD therefore traverses this memory area as it writes the reconstructed image thereto.

In Figure 2b, image l₀ is output by the video decoder 22 so as to be displayed by the placing of the display pointer PA at the start of the memory area A and the image P₃ is reconstructed in a memory area B which is therefore traversed by the decoding pointer PD.

In Figure 2c, image B₁ is decoded in a memory area C using the content of the memories A and B (reference images l₀ and P₃). Once decoded, image B₁ can be displayed (output by the video decoder 22) by placing the display pointer PA at the start of the memory area C, as is represented in Figure 2d.

Similarly, image B₂ is decoded in memory area C using the content of memories A and B (Figure 2e) then displayed (Figure 2f).

Figure 2f also illustrates the decoding of image P₆ in memory area A (and thus the overwriting of the data which corresponded to image I₀).

Once the reference image P₆ has been decoded, it is possible to proceed with the successive decoding of images B₄ and B₅ in memory area C as is represented in Figures 2g and 2h. (Although not represented in the figures, the displaying of image B₄ takes place of course as soon as this image is decoded.)

Image l₀' of the next group is then received and decoded in memory area B (Figure 2i) so as to allow the decoding (and the display, not represented) in memory area C of the images B₇ and B₈ as may be seen in Figures 2j and 2k. (One may also note the displaying of image P₆ in Figure 2j.)

Finally, in Figure 2l, the decoding of the image P₃' of the new group takes place in concert with the displaying of image l₀'. The process therefore repeats for the new group of images as described previously.

The digital decoder 2 can also operate in a mode in which it generates a video signal intended for display based only on the I type images of the MPEG digital stream received. In this mode (dubbed mode I for greater conciseness), one wishes to maintain synchronism between the audio and the video. To do this, it is proposed that the conventional decoding procedure be maintained and that only the display be modified.

In order to be able both to decode all the images received (that is to say the images of types I, P and B) and to maintain the displaying of the image I of the group, it is proposed for example that 4 frame memory areas A, B, C and D be used. During the decoding of a B type image, a memory area will therefore be used to store the image of I type to be displayed, two memory areas will be used to store the reference images (which may be two images of P type and hence distinct from the image of I type) and the last memory area will be used for the decoding of the B type image.

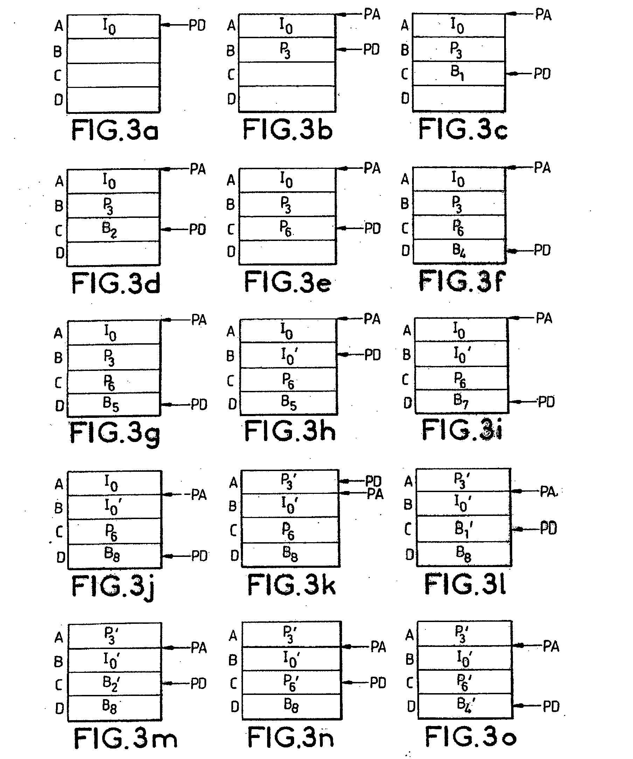

The decoding process in mode I of the sequence mentioned above is represented in detail in Figures 3a to 3o.

In Figure 3a, the image l₀ is decoded in memory area A.

Once the image l₀ has been decoded, it is presented and displayed by the placing of the display pointer PA at the start of memory area A, as may be seen in Figure 3b. It is important to note that the display pointer PA will be maintained in this position in the course of the decoding of the P and B type images and will possibly be moved again only when a new I type image is decoded. Thus the YUV digital stream (intended for display) will represent the I type image throughout the decoding of the other images. This function is therefore akin to a freeze frame.

Figure 3b also shows the decoding of image P₃ in memory area B. The successive decoding of images B₁ and B₂ may then take place (Figures 3c and 3d) in memory area C.

As illustrated in Figure 3e, the decoding of image P₆ is performed in memory area C. Specifically, contrary to the normal mode of operation, it is not possible in mode I to overwrite the image l₀ stored in memory area A since the latter is used to generate the YUV digital stream intended for display.

In Figure 3f, the decoding of image B₄ is carried out using the memory areas B and C and the reconstructed image is stored in memory area D. (It may be noted that it would alternatively have been possible to store image P₆ in memory area D and to decode image B₄ to memory area C.)

In Figure 3f, all the memory areas are therefore used : memory area A for the storage of the I type image to be displayed, memory areas B and C for the storage of the reference images (of P type) and memory area D for the decoding of the B type image.

The decoding of image B₅ takes place in a similar manner in memory area D, as represented in Figure 3g.

The video decoder 22 then receives the next I type image, here dubbed l₀', and decodes it in an available memory area, for example memory area B (area D could also be used), as may be seen in Figure 3h.

Images B₇ and B₈ can then be decoded successively in memory D as indicated in Figures 3i and 3j.

It may be noted that during the decoding of images B₇ and B₈ the image I₀' is already reconstructed and is consequently ready for display. The image I₀' will be displayed (that is to say the display pointer PA will point to the start of the memory area B to obtain the presentation of image I₀' at the output of the video decoder 22 with a view to its display) precisely when the local clock of the decoder reaches the instant of display specified by the PTS label (PTS standing for *presentation time stamp*) associated with image l₀'.

The procedure for decoding the new group of images then continues as represented in Figures 3k to 3o : decoding of P₃' in area A, decoding of B₁' then B₂' in area C by virtue of the data stored in areas B and A, decoding of P₆' in area C, then decoding of B₄' in area D by virtue of the data stored in areas A and C (l₀' using area B for display).

In the course of the decoding of the new group of pictures, the display pointer PA is maintained at the start of memory area B so as to generate a YUV digital stream intended for a display based only on the image l₀'.

The decoding of the groups of pictures continues thus according to this cycle.

In mode I, the audio decoder 24 continues normally the decoding of the incoming MPEG Audio stream into streams PCM R and PCM L and the converter 30 therefore generates audio signals Audio R and Audio L in synchronism with the decoded (but not displayed) video stream. The sound part of the incoming stream is therefore played normally by the digital decoder 2 although only the I type images are displayed.

At any moment, the normal mode can be resumed without requiring resynchronization of the stream : it is in fact sufficient to place the display pointer PA at the start of the memory area to be displayed according to the normal mode. The image to be displayed is ready to be so immediately since it has been decoded by the normal decoding procedure. Resumption of the normal mode is therefore effected without delay or occurrence of a black screen.

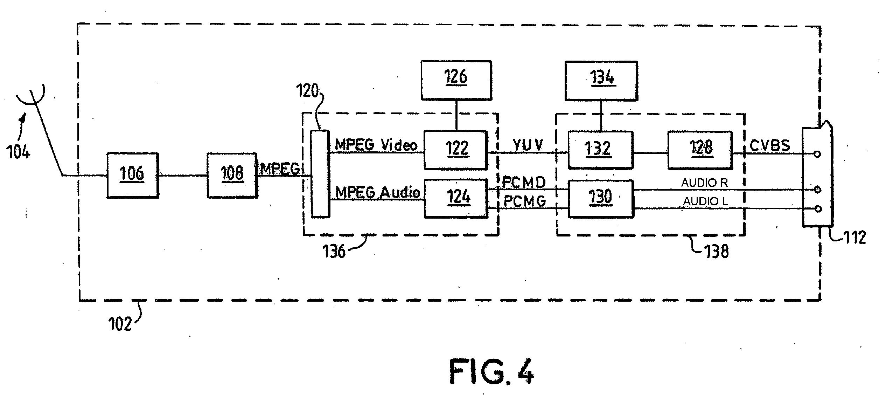

Another embodiment of a digital decoder 102 according to the invention is represented in Figure 4.

The digital decoder 102 is a bi-processor decoder (or bi-CPU) which comprises two processors : an MPEG decoding processor 136 (sometimes dubbed a DIG TV for short, standing for digital television) and a video encoding processor 138 (sometimes dubbed HOST since it also manages other functions of the digital decoder).

The decoding processor 136 receives the MPEG elementary stream after tuning, demodulation and demultiplexing of a signal picked up by an antenna 104 in a tuner/demodulator 106 and a demultiplexer 108. The decoding processor 136 comprises an input module 120 which separates the MPEG Video stream (destined for the video decoder 122) from the MPEG Audio stream (destined for the audio decoder 124).

The video decoder 122 decodes the incoming packets with the aid of the video memory 126 as already explained with regard to the first embodiment and generates at the output of the decoding processor 136 a YUV digital stream according to the CCIR 601 standard.

The audio decoder 124 decodes the incoming MPEG Audio stream and generates at the output of the decoding processor 136 two digital streams PCM R and PCM L each representing the sound of an audio channel, respectively right and left.

According to this embodiment, the entire collection of images of the incoming MPEG Video stream is decoded by the video decoder 122, in normal mode as in mode I (in the manner in which this is described in the normal mode of operation of the first embodiment). The YUV digital stream therefore represents a video sequence composed of images of types I, P and B, in normal mode as in mode I. The digital streams PCM R and PCM L are naturally generated in synchronism with the YUV digital stream.

The YUV, PCM R and PCM L digital streams are transmitted to the encoding processor 138. The PCM R and PCM L digital streams are converted therein respectively into audio signals Audio R and Audio L destined for a connector 112 for transmission to an apparatus for restoring the stereo sound that they represent (for example a television equipped with loudspeakers).

The YUV digital stream is received within the encoding processor 138 by a capture module 132. The capture module 132 is able to receive the YUV digital stream and to store the data received in an associated memory 134. The data stored in the associated memory 134 (and which represent an image to be displayed) are transmitted to a video encoder 128 which generates a corresponding CVBS video signal destined for the connector 112.

Capture (that is to say the real time storage of the data received in the associated memory 134) can be deactivated. In this case, the YUV digital stream received is no longer considered by the encoding processor 138, the associated memory 134 is therefore no longer modified and the digital encoder 128 repeatedly generates a CVBS video signal representing the image stored in the associated memory 134. The deactivation of capture therefore causes a freezing of the image.

In normal mode of operation, capture is activated, so that the whole of the YUV digital stream (which contains the digital representation of images of types I, P and B) is used to generate the CVBS video signal.

When one wishes on the other hand to display only the images of I type (mode I), it is proposed that the decoding procedure be kept unchanged but that capture be deactivated during reception of the YUV digital stream representing P or B type images so as to activate it only when the YUV digital stream represents an image of I type.

The information according to which the YUV digital stream represents an image of I type or otherwise may be given by the decoding processor 136 and transmitted to the encoding processor 138 via a link, not represented in Figure 4 (for example of the I2C type).

By virtue of the activation of capture in respect of the images of I type only, the CVBS video signal represents only the images of I type of the incoming MPEG Video stream. However, the decoding procedure continues normally in the decoding processor 136 and therefore makes it possible to continue to generate and to play the audio pathway in synchronism with the undisplayed decoded images (P and B images).

Thus, the resumption of the normal mode may be effected without delay and without having to display a black screen since the simple activation of continuous capture (normal mode) suffices to transmit to the video encoder 128 the previously decoded image to be displayed, in synchronism with the audio pathway.

It is important to note in a general manner that the decoding and display procedures (or procedure of presentation for display) are effected continuously (that is to say in real time) on the incoming digital stream. Moreover, these various procedures are simultaneous.

The invention is naturally not limited to the embodiments described above. For example, although the description of the examples above always makes reference to the displaying of I images only, it applies also to cases of freezing on any type of image and of display based only on the images of types I and P of the MPEG digital stream received.

In this last case, the images of type I and P will be considered to be images of the first type and the images of type B to be images of the second type.

Specifically, as indicated at the start of the account, the expressions "first type" and "second type" are not defined in the MPEG standard but are used here to simplify the account of the invention. The images of the first type are the images to be displayed when one wishes to display only the images of certain types ; the first type may thus also signify type I in certain cases or may cover types I and P in other cases. Complementarily, the second type represents the type or types of image that one does not wish to display, namely types P and B in the first case and type B in the second case.

## Claims

1. Process for controlling an audio/video digital decoder comprising the following steps :
- continuous acquisition of a digital audio/video stream (MPEG), the digital video stream (MPEG Video) being composed of an ordered sequence of images (I₀, P₃, B₁, B₂, P₆, B₄, B₅, I₀', B₇, B₈) ;
- video decoding of all the images of the sequence (l₀, P₃, B₁, B₂, P₆, B₄, B₅, l₀', B₇, B₈) ;
- generation of a video signal (CVBS) based on only part (I₀ ; I₀, I₀'; l₀, P₃, P₆, l₀') of the images of the sequence ;
- decoding the digital audio stream (MPEG Audio) into an audio sequence in synchronism with the video decoding.

2. Process according to Claim 1, comprising the step of :
- playing the audio sequence.

3. Process according to Claim 1 to 2, in which the said part is a single image (l₀) of the sequence.

4. Process according to one Claim 1 or 2, in which the sequence comprises images of a first type (l₀, l₀' ; l₀, P₃, P₆, l₀') and images of a second type (P₃, B₁, B₂, P₆, B₄, B₅, B₇, B₈; B₁, B₂, B₄, B₅, B₇, B₈ ) and in which the said part is limited to the images of the first type ( l₀, l₀' ; l₀, P₃, P₆, l₀').

5. Process according to one of Claims 1 to 4, in which the acquisition is a reading from a digital medium.

6. Process according to one of Claims 1 to 4, in which the acquisition is a reception of a digital stream.

7. Process according to one of Claims 1 to 6, in which the video signal is intended for display.

8. Process for controlling an audio/video digital decoder comprising the following steps :
- continuous acquisition of a digital audio/video stream, the digital video stream being composed of an ordered sequence of images of a first type (I ; I, P) and of a second type (P, B ; B) ;
- video decoding of the images of the first type (I ; I, P) and of the images of the second type (P, B ; B) ;
- generation of a video signal (CVBS) based on the images of the first type (I ; I, P) only.

9. Process for controlling an audio/video digital decoder comprising the following steps :
- video decoding of first data into a first image (I₀) of the first type (I ; I, P) ;
- displaying of the first image (I₀) and simultaneous video decoding of second data into images of the second type (P, B ; B) and of third data into a second image (I₀') of the first type ;
- displaying of the second image (I₀').
